# EUROPÄISCHE PATENTSCHRIFT

(11) **EP 0 966 843 B1**
(45) Veröffentlichungstag und Bekanntmachung des Hinweises auf die Patenterteilung: **02.06.2004**
(21) Anmeldenummer: 98922583.4
(22) Anmeldetag: 11.03.1998
(51) Int. Cl.: H04Q 1/14

(54) **VERTEILEREINRICHTUNG FÜR TELEKOMMUNIKATIONSANLAGEN**
DISTRIBUTOR FOR TELECOMMUNICATIONS INSTALLATIONS
DISPOSITIF DE DISTRIBUTION POUR INSTALLATIONS DE TELECOMMUNICATION

(30) Priorität: 13.03.1997 DE 19710481
(43) Veröffentlichungstag der Anmeldung: 29.12.1999
(73) Patentinhaber: CCS Technology, Inc., Wilmington, DE 19803 (US)
(72) Erfinder: NATH, Torsten, D-10367 Berlin (DE); BUTZKE, Bernd, D-86911 Diessen (DE)
(74) Vertreter: Sturm, Christoph, Dipl.-Ing.
(86) Internationale Anmeldenummer: PCT/DE1998/000715
(87) Internationale Veröffentlichungsnummer: WO 1998/041034

(56) Entgegenhaltungen:
- DE-A- 2 048 104
- DE-A- 4 030 444
- DE-B- 2 658 296
- FR-A- 2 346 927

## Beschreibung

Die Erfindung betrifft eine Verteilereinrichtung für Telekommunikationsanlagen gemäß dem Oberbegriff des Patentanspruchs 1.

Eine derartige Verteilereinrichtung ist aus DE 40 30 444 A bekannt. Auch die DE 26 58 269 C zeigt eine Verteilereinrichtung, bei der die Anschlusselemente und die Kontaktteile der beiden Reihen in einem scheibenartigen Frontteil fixiert sind, das es in einem flachen Rückteil verankert ist. Bei der DE 26 58 296 C bilden das Frontteil und das Rückteil zusammen ein flaches Kontaktbauteil. Es ist üblich, derartige Kontaktbauteile zusammen mit scheibenförmigen Drahtführungselementen in einem Träger zu einem blockartigen Verteilermodul zusammen zufassen, wie dies z. B. durch die DE 20 48 104 C bekannt geworden ist. Weiterer Stand der Technik ist aus der FR 2 346 927 A bekannt.

Der Erfindung liegt die Aufgabe zu Grunde, eine neuartige Verteilereinrichtung zu schaffen.

Diese Aufgabe wird durch die Erfindung mit einer Verteilereinrichtung gemäß Anspruch 1 gelöst.

Durch die Zusammenfassung mehrerer Rückteile zu einem einzigen in sich stabilen Bauteil wird ein zusätzlicher Träger für die Kontaktbauteile nicht mehr benötigt. Es entfällt dementsprechend der Montageschritt des Einsetzens der Kontaktbauteile in das Trägerteil. Es versteht sich, ein derartiges Rückteil in Spritzgusstechnik zu fertigen, wobei zum Ausbilden die Aufnahmen für eine Vielzahl von Frontteilen nur ein Fertigungsschritt erforderlich ist. Derartige Spritzgussformen können durch Einsetze so variiert werden, das Rückteile je nach Bedarf mit einer unterschiedlichen Anzahl von Aufnahmen für die Frontteile versehen werden können.

Durch eine vorteilhafte Weiterbildung der Erfindung nach Anspruch 2 können die ankommenden und abgehenden Leitungen in den Kanälen bis unmittelbar zu den zugehörigen Anschlußelementen geführt werden. Damit entfallen die zusätzlichen Drahtführungselemente.

Durch die Weiterbildung nach Anspruch 3 ergibt sich eine einfache materialsparende und kompakte Struktur des Rückteils. Die spritzgußtechnische Ausformung ermöglicht es, ohne zusätzlichen Aufwand in der Grundplatte entlang ihrer Ränder kammartige Führungsschlitze für die Leitungen sowie z.B. Befestigungsöffnungen vorzusehen.

Im Folgenden wird die Erfindung anhand eines in der Zeichnung dargestellten Ausführungsbeispieles näher erläutert.
- Figur 1: zeigt in einer teilweise geschnittenen Seitenansicht eine Verteilereinrichtung zum Anschließen und Verbinden von ankommenden und abgehenden Leitungen,
- Figur 2: eine Draufsicht auf die Verteilereinrichtung nach Anspruch 1.

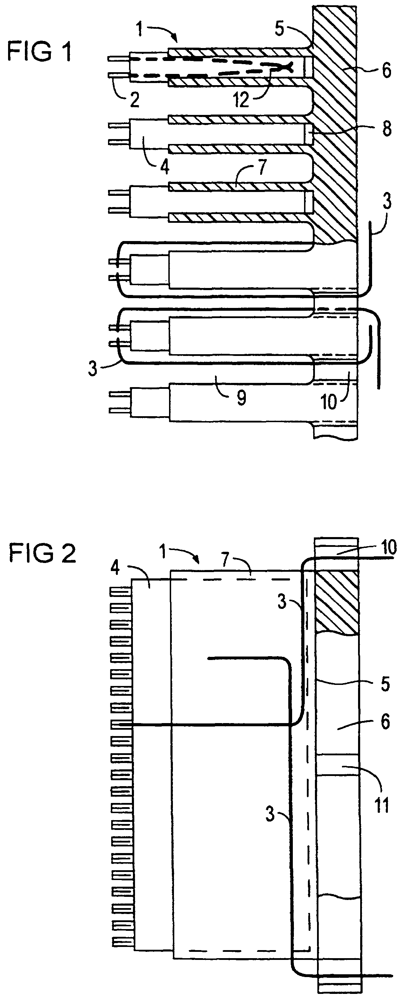

Nach den Figuren 1 und 2 ist eine Verteilereinrichtung 1 mit in parallelen Doppelreihen angeordneten Anschlußelementen 2 für ankommende und abgehende elektrische Leitungen 3 versehen. Die Anschlußelemente 2 einer Doppelreihe sind jeweils in einem Frontteil 4 zusammengefaßt und paarweise über interne Kontaktteile 11 miteinander verbunden. Die Verteilereinrichtung 1 weist eine Vielzahl der flachen Frontteile 4 auf, die in einer stapelartigen Anordnung gehalten sind. Ein für alle Frontteile 4 gemeinsames Rückteil 5 ist mit einer durchgehenden Grundplatte 6 versehen, an der gefächert angeordnete schachtartige Leisten 7 einstückig angesetzt sind. Diese sind mit Aufnahmen 8 versehen, in die die Frontteile 4 von der der Grundplatte 6 abgewandten Seite her derart eingesteckt sind, daß die Kontaktteile 11 genau fixiert sind.

Zwischen den Leisten 7 sind schlitzartige durchgehende Kanäle 9 ausgebildet, in denen die ankommenden und abgehenden Leitungen bis zu den als Schneidklemmen ausgebildeten Anschlußelementen 2 geführt sind. Die Grundplatte weist entlang ihrer Längsseiten in einer kammartigen Ausformung schlitzartige Ausnehmungen 10 auf, in denen die Leitungen 3 von den Kanälen 9 aus zur gegenüberliegenden Rückseite der Grundplatte 6 geführt sind. In der Grundplatte sind weiterhin Befestigungsöffnungen 12 für die Verteilereinrichtung 1 eingeformt.

## Patentansprüche

1. Verteilereinrichtung (1) mit in parallelen Reihen angeordneten Anschlusselementen (2) für ankommende und abgehende Leitungen (3),
wobei die Anschlusselemente (2) jeweils zweier benachbarter Reihen mit Kontaktteilen (11) verbunden sind, die in das Innere der Verteilereinrichtung (1) hineinragen,
wobei die Anschlusselemente (2) und die Kontaktteile (11) der beiden Reihen in einem Frontteil (4) fixiert sind, das in einem Rückteil (5) der Verteilereinrichtung (1) verankert ist, wobei für mehrere aufeinanderfolgende Frontteile (4) ein gemeinsames Rückteil (5) vorgesehen ist,
**dadurch gekennzeichnet,**
**dass** das Rückteil (5) eine durchgehende Grundplatte (6) aufweist, wobei an der Grundplatte (6) stegartige, gefächert angeordnete Leisten (7) einstückig angesetzt sind, und wobei in die Leisten (7) jeweils eines der Frontteile (4) verankert ist,
**dass** das Rückteil (5) in Spritzgusstechnik ausgeführt und derart stabil ausgebildet ist, dass es zusammen mit den angesetzten Frontteilen (4) ein selbsttragendes Verteilermodul bildet.

2. Verteilereinrichtung nach Anspruch 1,
**dadurch gekennzeichnet,**
**dass** das Rückteil (5) zwischen den Frontteilen (4) mit schlitzartigen Kanälen (9) zur Aufnahme der ankommenden und abgehenden Leitungen (3) versehen ist.

## Claims

1. Distributor (1) having connecting elements (2) arranged in parallel rows for incoming and outgoing lines (3),
the connecting elements (2) of two adjacent rows in each case being connected to contact parts (11) which project into the interior of the distributor (1),
the connecting elements (2) and the contact parts (11) of the two rows being fixed in a front part (4) which is anchored in a rear part (5) of the distributor (1), a common rear part (5) being provided for a number of successive front parts (4),
**characterized**
**in that** the rear part (5) has a continuous base plate (6), web-like strips (7) arranged like a fan being integrally attached to the base plate (6), and in each case one of the front parts (4) being anchored in the strips (7),
**in that** the rear part (5) is produced using injection moulding technology and is formed in such a stable manner that it forms a self-supporting distributor module together with the attached front parts (4).

2. Distributor according to Claim 1, **characterized in that** the rear part (5) is provided, between the front parts (4), with slot-like channels (9) to accommodate the incoming and outgoing lines (3).

## Revendications

1. Dispositif de distribution (1) avec des éléments de raccordement (2) disposés en rangées parallèles pour des lignes (3) d'entrée et de sortie,
les éléments de raccordement (2) de deux rangées respectivement voisines étant à chaque fois connectés à des pièces de contact (11) qui pénètrent à l'intérieur du dispositif de distribution (1),
les éléments de raccordement (2) et les pièces de contact (11) des deux rangées étant fixés dans une partie frontale (4) qui est ancrée dans une partie arrière (5) du dispositif de distribution (1), une partie arrière (5) commune étant prévue pour plusieurs parties frontales (4) successives,
**caractérisé en ce que**
la partie arrière (5) présente une plaque de base continue (6), des barrettes (7) compartimentées, en forme de languettes, étant montées d'une pièce sur la plaque de base (6), et à chaque fois l'une des parties frontales (4) étant ancrée dans les barrettes (7),
**en ce que** la partie arrière (5) est réalisée suivant une technique de moulage par injection et est réalisée de manière suffisamment stable pour qu'elle forme avec les parties frontales (4) installées un module de distributeur autoporteur.

2. Dispositif de distribution selon la revendication 1,
**caractérisé en ce que**
la partie arrière (5) est pourvue, entre les parties frontales (4), de canaux en forme de fentes (9) pour recevoir les lignes (3) d'entrée et de sortie.
